# EUROPEAN PATENT SPECIFICATION

(11) **EP 1 621 824 B1**
(45) Date of publication and mention of the grant of the patent: **26.01.2011**
(21) Application number: 05013043.4
(22) Date of filing: 16.06.2005
(51) Int. Cl.: F24F 12/00

(54) **Ventilating system**
Belüftungssystem
Système de ventilation

(30) Priority: 28.07.2004 KR 2004059267
(43) Date of publication of application: 01.02.2006
(73) Proprietor: LG Electronics, Inc., Seoul (KR)
(72) Inventor: Kim, Kyung Hwan, Uiwang-si Gyeonggi-do (KR); Kim, Ho Jung, Incheon (KR); Choi, In Ho, Gunpo-si Korea (KR); Chung, Baik Young 304-1902, Doosan Apt., Incheon-si Korea (KR)
(74) Representative: TER MEER - STEINMEISTER & PARTNER GbR

(56) References cited:
- PATENT ABSTRACTS OF JAPAN vol. 012, no. 078 (M-675), 11 March 1988 (1988-03-11) & JP 62 218747 A (MITSUBISHI ELECTRIC CORP), 26 September 1987 (1987-09-26)
- PATENT ABSTRACTS OF JAPAN vol. 2003, no. 07, 3 July 2003 (2003-07-03) & JP 2003 074936 A (MITSUBISHI ELECTRIC CORP), 12 March 2003 (2003-03-12)
- PATENT ABSTRACTS OF JAPAN vol. 012, no. 490 (M-779), 21 December 1988 (1988-12-21) & JP 63 210544 A (MITSUBISHI ELECTRIC CORP), 1 September 1988 (1988-09-01)
- PATENT ABSTRACTS OF JAPAN vol. 1998, no. 04, 31 March 1998 (1998-03-31) & JP 09 310899 A (MITSUBISHI ELECTRIC CORP), 2 December 1997 (1997-12-02)
- PATENT ABSTRACTS OF JAPAN vol. 014, no. 144 (M-0951), 19 March 1990 (1990-03-19) & JP 02 010040 A (MITSUBISHI ELECTRIC CORP), 12 January 1990 (1990-01-12)

## Description

### BACKGROUND OF THE INVENTION

### Field of the Invention

The present invention relates generally to a ventilating system. More specifically, the invention relates to a ventilating system having a pre-heat exchanger, which performs a heat exchange between the indoor air being exhausted to the outside of a room and the outdoor air being supplied to the inside of the room.

### Background of the Related Art

The air in a closed room is gradually contaminated over time, due to the breathing, etc. by people inside the room. Thus, the contaminated indoor air needs to be replaced frequently with the fresh outdoor air through a ventilating system or the like. A common-type ventilating system is installed, in general, on the ceiling inside a room. Thus, in order to install the conventional ventilating system on the ceiling, an adequate space must be provided between the ceiling and the bottom of the upper floor. Accordingly, the distance between the floors, i.e., the floor height must be increased, thereby decreasing the spatial efficiency and the economic efficiency of a building. Therefore, in order to solve this problem, the ventilating system needs to be designed smaller.

On the other hand, recently, in order to improve the heat efficiency thereof, the ventilating system has adopted a pre-heat exchanger for a heat exchange between the indoor air being exhausted to the outside of a room and the outdoor air being supplied to the inside of the room. Due to the heat exchanger, however, the size of the system becomes inevitably larger. Accordingly, there is a need to provide a compact ventilating system, while having such a heat pre-heat exchanger.

JP 62 218747 A describes a ventilation system has a pre-heat exchanger, a supply- and an exhaust fan. The air is supplied and discharged from the front side to the rear side of the case. The rotation axis of the ventilation system is perpendicular to the top or bottom surface. Moreover, the motor of the ventilation system is encapsulated from the air passages requiring additional space.

### SUMMARY OF THE INVENTION

Accordingly, the present invention has been made in order to solve the above problems in the art, and it is an object of the invention to provide a compact ventilating system having a pre-heat exchanger.

The object is solved by the features of the independent claim.

The air-supply fan unit and the air-exhaust fan unit are disposed in parallel with the pre-heat exchanger. The air-supply fan unit and the air-exhaust fan unit are constructed so as to suction air in the axial direction and exhaust air in the radial direction respectively.

The air-supply fan unit is disposed between the inside of the room and the pre-heat exchanger inside the case. The air-exhaust fan unit is disposed between the outside of the room and the pre-heat exchanger inside the case.

The pre-heat exchanger includes flow passageways, which are perpendicular to the entering direction of the indoor air and the outdoor air into the case. The pre-heat exchanger includes at least one edge or face, which is closely contacted with the inner face of the case so as to prevent the indoor air and the outdoor air entered into the case from being mixed with each other.

The ventilating system of the invention comprises a partition plate provided between the pre-heat exchanger, the air-supply fan unit, and the air-exhaust fan unit, so as to prevent the indoor air and the outdoor air passed through the pre-heat exchanger from being mixed with each other.

The partition plate includes: a central plate disposed between the air-supply fan unit and the air-exhaust fan unit; an upper plate guiding air passed through the pre-heat exchanger into either one of the air-supply fan unit and the air-exhaust fan unit; a lower plate guiding air passed through the pre-heat exchanger into the other one of the air-supply fan unit and the air-exhaust fan unit. The upper plate is extended from the upper part of the central plate to the inner face of the case and the pre-heat exchanger, and the upper plate is extended from the lower part of the central plate to the inner face of the case and the pre-heat exchanger.

The case includes: a first inlet provided in one face of the case and introducing the indoor air into the case; and a second inlet provided in the opposing face to the first inlet of the case and introducing the outdoor air into the case.

The heat exchanger includes at least one edge or face, which is closely contacted with the inner face of the case so as to isolate the first and second inlets from each other.

The pre-heat exchanger includes a plurality of first flow passageways disposed spaced apart from one another and a plurality of second flow passageways disposed between the first flow passageways, where the indoor air flows the first flow passageways and the outdoor air flows the second flow passageways.

Each of the air-supply fan unit and the air-exhaust fan unit includes a scroll casing mounted on the case, and a fan provided inside the scroll casing and suctioning the air passed through the pre-heat exchanger in the axial direction and guiding in the radial direction thereof.

Each of the air-supply fan unit and the air-exhaust fan unit includes a motor disposed between the fan and the pre-heat exchanger, and a motor mount secured to the scroll casing and supporting the motor so as to be spaced apart from the fan by a certain distance such that the air passed through the pre-heat exchanger can be in-flown to the fan.

The ventilating system of the invention may further comprise a filter for filtering the outdoor air. The filter is provided inside the case and disposed between the pre-heat exchanger and the outside of the room. In addition, the system of the invention may further comprise a filter for filtering the indoor air. The filter is provided inside the case and disposed between the pre-heat exchanger and the inside of the room.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating a ventilating system according to the present invention;

FIG. 2 is a partial perspective view showing the pre-heat exchanger in the ventilating system of FIG. 1;

FIG. 3 is a partial perspective view showing the air-supply fan unit in the ventilating system of FIG. 1;

FIG. 4 is a partial perspective view showing the partition plate in the ventilating system of FIG. 1;

FIGS. 5 and 6 are diagrams showing the air flow when the ventilating system of the invention is operated in an ventilation mode;

FIG. 7 is a diagram showing the air flow when the outdoor air is supplied into the inside of a room; and

FIG. 8 is a diagram showing the airflow when the indoor air is exhausted into the outside of the room.

### DETAILED DESCRIPTION OF THE PREFERRED EMBODIMENTS

Reference will now be made in detail to the preferred embodiments of the present invention, examples of which are illustrated in the accompanying drawings. In the description, like elements are denoted by like reference numerals and explanation for identical elements will not be repeated.

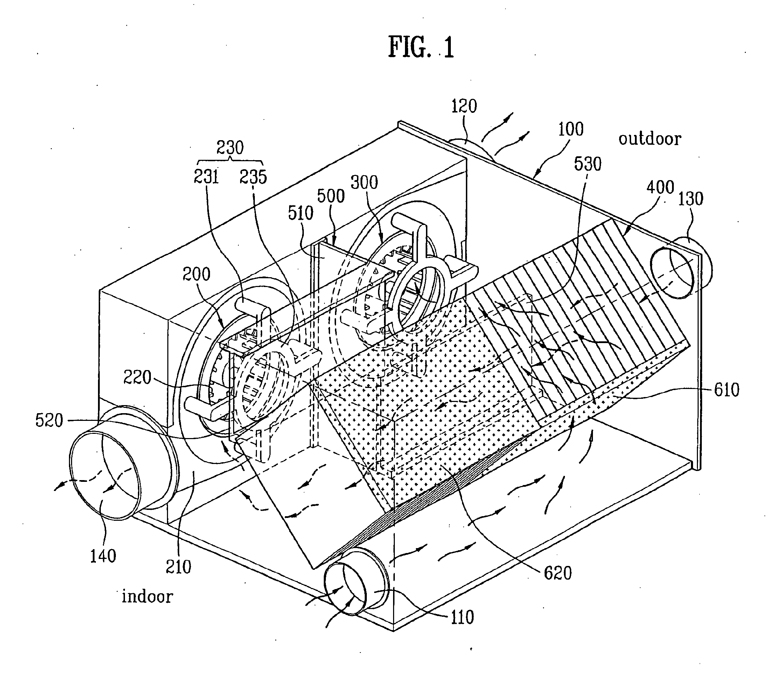

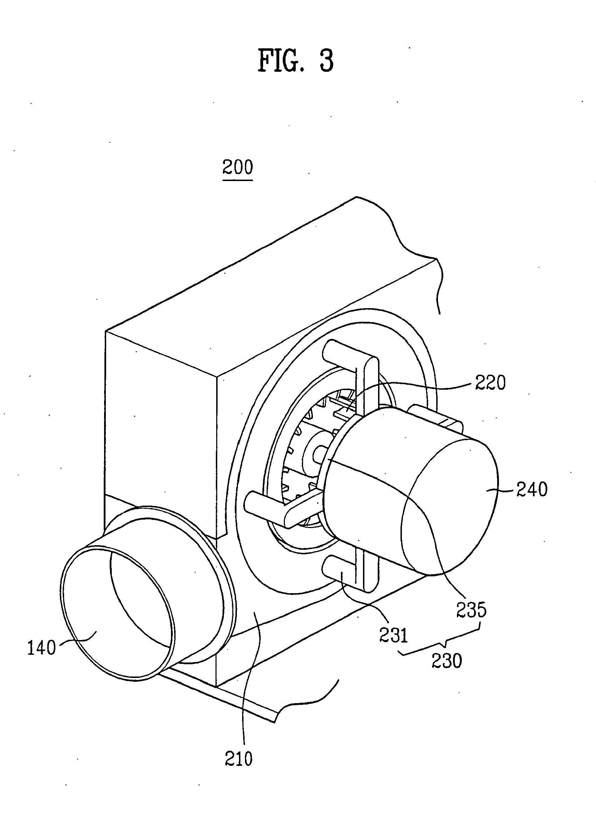

FIG. 1 is a perspective view of a ventilating system according to one embodiment of the invention. In FIG. 1, a motor 240 (see FIG. 3) is omitted, for the purposes of clear illustration of an air-supply fan unit 200 and an air-exhaust fan unit 300. Referring to FIG. 1, the ventilating system of the invention includes a case 100, a pre-heat exchanger 400, an air-supply fan unit 200, and an air-exhaust fan unit 300.

The case 100 has a space provided therein and a plurality of ports through which a plurality of ducts (not shown) fluid-communicated with the inside and outside of a room is connected. More specifically, the ports include a first inlet 110 for introducing the indoor air to the inside of the case 100, a first outlet 120 for discharging the indoor air from the case 100, a second inlet 130 for introducing the outdoor air to the inside of the case 100, and a second outlet 140 for discharging the outdoor air from the case 100.

The first inlet 110 and the second outlet 140 are provided respectively near the lower corners in one side face of the case 100, and the second inlet 130 and the first outlet 120 are provided respectively near the upper corners in the opposing side face of the case 100, as shown in FIG. 1. In addition, the first inlet 110 and the first outlet 120 are disposed so as to be diagonally opposed to each other, and the second inlet 130 and the second outlet 140 are disposed so as to be diagonally opposed to each other.

The first inlet 110 and the second outlet 140 are connected with ducts fluid-communicated with the inside of a room, and the second inlet 130 and the first outlet 130 is connected with ducts fluid-communicated with the outside of the room. Thus, the indoor air is flown to the inside of the case 100 through the first inlet 110 and then discharged to the outside of the room, as indicated by solid-line arrows in FIG. 1. The outdoor air is flown to the case 100 through the second inlet 130 and then supplied to the inside of the room through the second outlet 140, as indicated by dot-line arrows in FIG.1.

The indoor air and the outdoor air flown to the inside of the case 100 pass through the pre-heat exchanger 400, as shown in FIG. 1. The pre-heat exchanger 400 is installed inside the case 100 adjacent to the first inlet 110 and the second inlet 130.

As shown in FIG. 1, the pre-heat exchanger 400 has the shape of an elongated rectangular block and is installed in such a manner that the end portion thereof is contacted with that side face of the case 100 that the first inlet 110 is provided in and the other end portion thereof is contacted with that opposing face of the case 100 that the second inlet 130 is provided therein. In addition, as shown in FIG. 1, the edges of the pre-heat exchanger 400 formed along the length thereof are partially closely contacted with the top face and the bottom face of the case 100, and with the side face adjacent to the first inlet 110 and the second inlet 130.

Therefore, the first inlet 100 and the second inlet 130 are isolated from each other, and the first inlet 110 is isolated from the second outlet 140 and the second inlet 130 is isolated from the first outlet 120. Accordingly, the indoor air, which is flown to the inside of the case 100 through the first inlet 110, cannot be flown to the first outlet 120 without passing the pre-heat exchanger 400. The outdoor air, which is flown to the inside of the case 100 through the second inlet 130, cannot flow towards the second outlet 140 without passing the pre-heat exchanger 400. The indoor air and the outdoor air entered the case 100 move along respective flow passageways, which are separated from each other by the pre-heat exchanger 400.

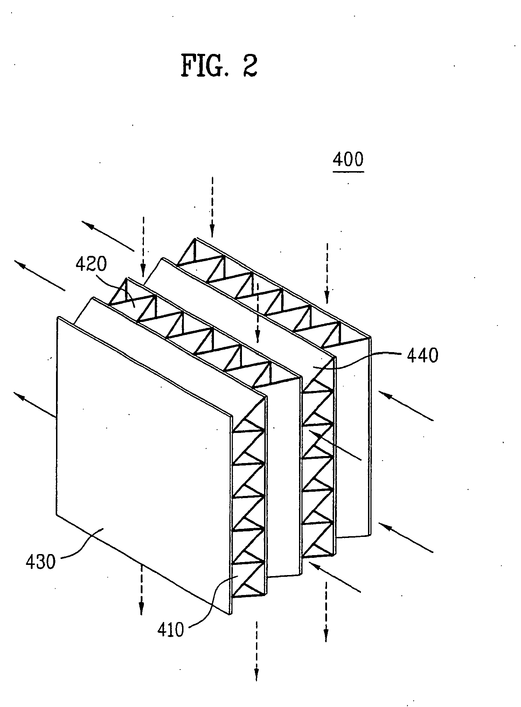

On the other hand, the pre-heat exchanger 400 carries out a heat transfer between the indoor air and the outdoor air while crossing each other indirectly. More specifically, as shown in FIG. 2, the pre-heat exchanger 400 is provided with a plurality of first flow passageways 410 disposed spaced apart from one another and a plurality of second flow passageways disposed between the first flow passageways 410. The indoor air and the outdoor air flow through the first and second flow passageways respectively.

Between the first flow passageway 410 and the second flow passageway 420 is provided a plate 430, which separates the first and second flow passageways from each other, and through which a heat transfer is occurred between the indoor air and the outdoor air. The plate 430 is disposed, for example, perpendicularly to the direction in which the indoor air and the outdoor air are flown to the inside of the case 100 through the first inlet 110 and the second inlet 130. Accordingly, the first and second flow passageways 410 and 420 also are disposed perpendicularly to the direction in which the indoor air and the outdoor air are entered into the case.

The first and second flow passageways 410 and 420 are provided with a guide 440, which guides the flow of the indoor air and the outdoor air respectively and expands the heat exchanging area thereof. The guide 440 is formed, for example, of a plurality of folds, as shown in FIG. 2. The upper edge and the lower edge of each fold are contacted with the top face and the bottom face respectively of each plate 430.

As shown in FIG. 1, the air-supply fan unit 200 and the air-exhaust fan unit 300 are fixed to the case 100 respectively, and functions to suction the outdoor air and the indoor air passed through the pre-heat exchanger 400 and then supply into the inside of a room or discharge to the outside of a room. The air-supply fan unit 200 is preferred to be installed between the pre-heat exchanger 400 and the inside of the room. The air-exhaust fan unit 300 is preferred to be installed between the pre-heat exchanger 400 and the outside of the room.

Therefore, the air flowability can be improved by developing a low pressure at the discharge side of the pre-heat exchanger 400. Thus, due to a pressure difference between the discharge side and the suction side of the pre-heat exchanger 400, the air can easily pass through the pre-heat exchanger 400 and then be suctioned to the air-supply fan unit 200 and the air-exhaust fan unit 300. Consequently, the air flowability can be enhanced and also the noise caused by the airflow can be minimized.

In contrast, however, if the air-supply fan unit 200 and the air-exhaust fan unit 300 are provided in the suction side of the pre-heat exchanger 400, the pre-heat exchanger 400 placed in the discharge side of the air-supply fan unit 200 and the air-exhaust fan unit 200 acts as a high resistance. Thus, the back pressure of the air-supply fan unit 200 and the air-exhaust fan unit 300 increases and consequently the discharging ability of the air-supply fan unit 300 and the air-exhaust fan unit 300 is degraded, along with an increase in the air flowing noise.

The air-supply fan unit 200 and the air-exhaust fan unit 200 are disposed inside the case so as to be adjacent to each other and opposed to the pre-heat exchanger 400. In addition, the air-supply fan unit 200 and the air-exhaust fan unit 300 are disposed, for example, in parallel with the pre-heat exchanger 400, as shown in FIG. 1. The air-supply fan unit 200 and the air-exhaust fan unit 300 have substantially a same structure. Thus, the structure of the air-supply fan unit 200 will be explained, with reference to FIG. 3, which also substitutes the explanation of the air-exhaust fan unit 300.

The air-supply fan unit 200 includes a scroll casing 210 secured to the inner face of the case 100, and a fan 220 provided inside the scroll casing 210. The scroll casing 210 has an inlet (not shown) fluid-communicated with the inside of the case 100 and an outlet fluid-communicated with the second outlet 140. The fan 220 is disposed inside the scroll casing 210, the inlet of the scroll casing 210 is positioned in the axial direction of the fan 220, and the outlet of the scroll casing 210 is positioned in the radial direction of the fan 220. Therefore, as the fan 220 rotates, the outdoor air passed through the pre-heat exchanger 400 is suctioned along the axial direction of the air-supply fan unit 200 and then discharged in the radial direction.

The motor 240 for driving the fan 220 is provided inside the case, more specifically, between the fan 220 and the pre-heat exchanger 400. In addition, a motor mount 230 is provided so as to support the motor 240 in such a way to be spaced apart from the fan 220 by a certain distance. The motor mount 230 includes a plurality of legs 230 secured to the case 100 or the scroll casing 210 and extended inwards of the case 100, and a circular rim 235 connecting the end portions of the legs 231 and supporting the motor 240. On the other hand, the motor shaft secured to the rim 235 passes through the inlet of the scroll casing 210 and is assembled to the hub of fan 220.

As described above, the motor 240 is spaced apart adequately from the fan 220. Therefore, when the fan 220 rotates, the air passed through the pre-heat exchanger 400 can be suctioned inside the scroll casing 210 through the space between the fan 220 and the motor 240. Furthermore, the fan 220 and the pre-heat exchanger 400 are disposed so as to be adequately spaced apart from each other with the motor 240 placed in-between. Therefore, in the space between the fan 220 and the pre-heat exchanger 400, an adequate low pressure can be built up by means of the fan 220, and thus the air-supply fan unit 200 can have an adequate air-discharging capability. Furthermore, the air-flowing noise can be minimized. However, if the fan 220 and the pre-heat exchanger 400 are installed very close to each other, the air-suction and discharging ability of the fan 220 is significantly reduced and the air-flowing noise increases.

As mentioned above, the air-exhaust fan unit 300 has substantially the same structure as the air-supply fan unit 200. However, the outlet of the air-supply fan unit 200 is fluid-communicated with the second outlet 140, but in contrast, the air-exhaust fan unit 300 is fluid-communicated with the first outlet 120.

On the other hand, the case 100 is provided with filters for filtering the outdoor air and the indoor air flown to the inside of the case 100. The filters includes a first filter 610 for filtering the indoor air to be exhausted to the outside of the room and a second filter 620 for filtering the outdoor air to be supplied to the inside of the room. Preferably, the first filer 610 is provided in the suction side of the heat exchange 400, i.e., between the first flow passageway 410 of the pre-heat exchanger 400 and the inside of the room, and the second filter 620 is provided in the suction side of the pre-heat exchanger 400, i.e., between the second flow passageway 420 of the pre-heat exchanger 400 and the outside of the room. In this way, the outdoor air and the indoor air have an adequate flowability inside the pre-heat exchanger 400 and foreign matters are prevented from entering the pre-heat exchanger 400, thereby protecting the pre-heat exchanger 400.

On the other hand, if the first filter 610 and the second filter 620 is provided in the discharge side of the pre-heat exchanger 400, the first and second filters 610 and 620 act as a high resistance to impede the flow of the indoor air and the outdoor air, so that the indoor and outdoor air cannot flow properly inside the pre-heat exchanger 400. Also, foreign matters are accumulated inside the pre-heat exchanger 400, which thereby must be frequently cleaned up and replaced.

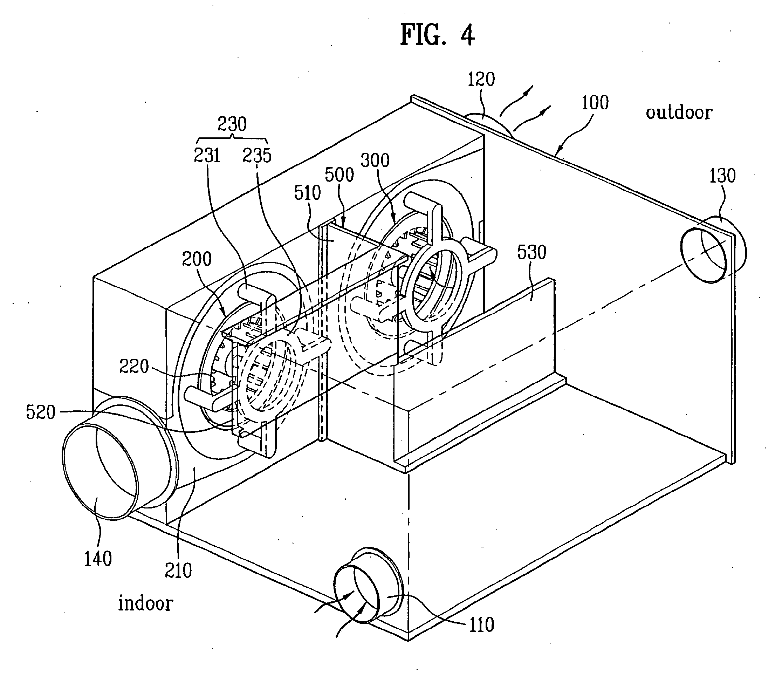

In addition, in order to prevent the indoor and outdoor air discharged from the pre-heat exchanger 400 from being mixed with each other, a partition plate 500 is provided between the pre-heat exchanger 400, the air-supply fan unit 200, and the air-exhaust fan unit 300. The partition plate 500 includes a central plate 510, an upper plate 520, and a lower plate 530, as shown in FIGS. 1 and 4.

The central plate 510 is provided between the air-supply fan unit 200 and the air-exhaust fan unit 300. For example, the central plate 510 is extended from the inner face of the case 100 to one corner of the pre-heat exchanger 400, and isolates the air-supply fan unit 200 from the air-exhaust fan unit 300.

As shown in FIG. 4, the upper plate 520 is extended perpendicularly to the central plate 510 from the upper portion of the central plate 510 to the inner face of the case 100. As shown in FIG. 1, the upper portion of the upper plate 520 is connected with the top face of the case 100, the lateral side of the upper plate 520 is connected with the central plate 510 and one side of the case 100, and the lower portion of the upper plate 520 is connected with the edge of the pre-heat exchanger 400.

As shown in FIG. 4, the lower plate 530 is extended perpendicular to the central plate 510 from the lower portion of the central plate 510 to the inner face of the case 100 in opposite direction to the upper plate 520. As shown in FIG. 1, the lower portion of the lower plate 530 is connected with the bottom face of the case 110, the lateral side of the lower plate 530 is connected with the central plate 510 and the other face of the case 100, and the lower portion of the lower plate 530 is connected with an edge of the pre-heat exchanger 400.

The partition plate 500 having the above-described structure isolates the air-supply fan unit 200 from the air-exhaust fan unit 300, and also isolates the first outlet 120 from the second outlet 140. Therefore, the indoor air, which has passed through the first flow passageway 410 of the pre-heat exchanger 400, and the outdoor air, which has passed through the second flow passageway 420 of the pre-heat exchanger 400, are not mixed with each other by the guide of the partition plate 500, and thus enter respectively the air-exhaust unit 300 and the air-supply fan unit 200.

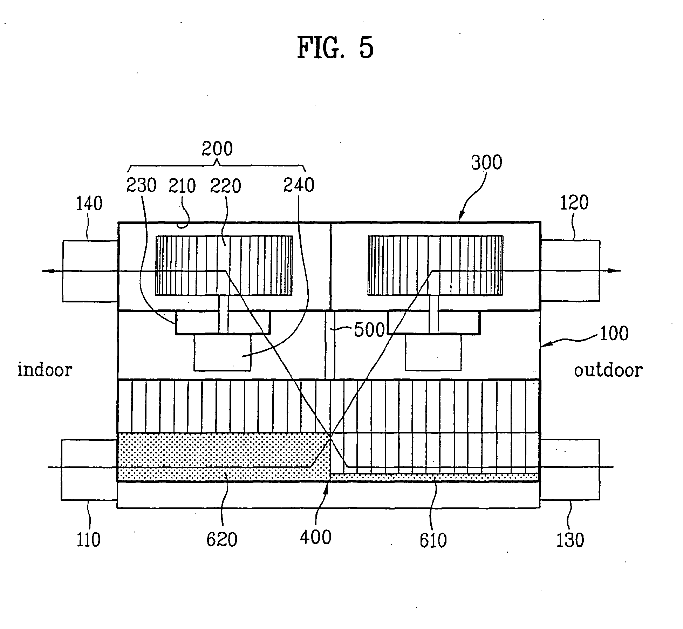

The ventilating system of the invention having the above-described structure is operated in three operation modes, i.e., in a ventilation mode, in an air-supply mode, and in an air-exhaust mode. These operation modes will be explained below, referring to FIGS. 5 to 8.

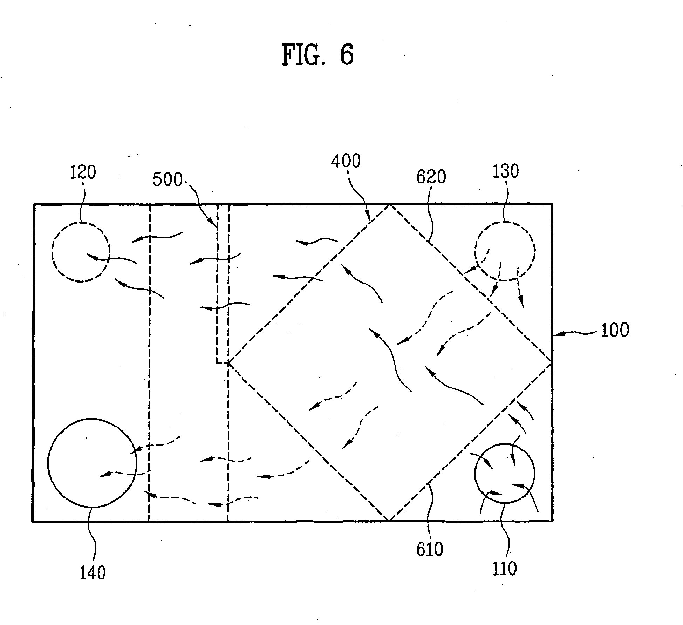

FIGS. 5 and 6 are diagrams showing the airflow when the ventilating system of the invention is operated in a ventilation mode. In the ventilation mode, contaminated indoor air is exhausted to the outside of a room and fresh outdoor air is supplied to the inside of the room. In this ventilation mode, both the air-supply fan unit 200 and the air-exhaust fan unit 300 are driven. Then, between the air-supply fan unit 200 and the second flow passageway 420 of the pre-heat exchanger 400 and between the air-exhaust fan unit 300 and the first flow passageway 410 of the pre-heat exchanger 400 is developed an adequate low pressure, and thus the outdoor air and the indoor air are flown to the inside of the room through the second inlet 130 and the first inlet 110.

The indoor air entered into the case 100 passes through the first filter 610 and then flows to the first flow passageways 410 of the pre-heat exchanger 400, which is formed perpendicular to the flowing direction into the case 100. In addition, the indoor air passed through the first flow passageways 410 of the pre-heat exchanger 400 enters the air-exhaust fan unit 300 along the flowing direction through the pre-heat exchanger 400. Then, the air-exhaust fan unit 300 discharges the indoor air in the radial direction and thus the indoor air is discharged to the outside through the first outlet 120.

The outdoor air flown into the case 100 through the second inlet 130 passes through the second filter 620 and then flows to the second flow passageways 420 of the pre-heat exchanger 400, which are formed perpendicular to the flowing direction into the case 100. The outdoor air passing through the second flow passageways 420 is heat-exchanged with the indoor air passing through the first flow passageways 410.

Therefore, the heat energy of the indoor air, which is exhausted to the outside, can be transferred to the outside air suctioned into the inside of a room to thereby recover a certain amount of energy. In this way, in summer time, the outdoor air can be slightly cooled down and then supplied to the inside of a room and, in winter time, the outdoor air can be slightly heated up and then supplied to the inside of the room.

The outside air passed through the pre-heat exchanger 400 enters the air-supply fan unit 200 along the flowing direction through the pre-heat exchanger 400. Then, the air-supply fan unit 200 discharges the outdoor air in the radial direction, and thus the indoor air is supplied to the inside of the room through the first outlet 120.

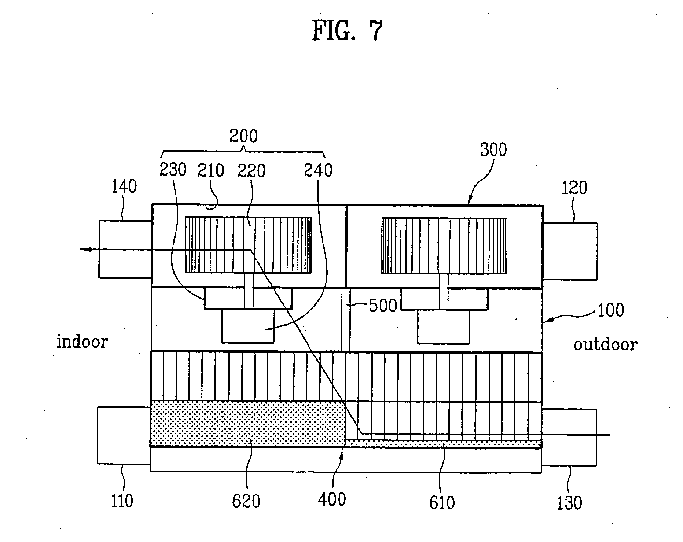

FIG. 7 is a diagram showing the airflow when the ventilating system is operated in an air-supply mode. In the air-supply mode, a fresh outdoor air is supplied to the inside of a room and the indoor air is not exhausted to the outside of the room. In this air-supply mode, the air-supply fan unit 200 is operated, but the air-exhaust fan unit 300 is not operated. Then, a low pressure is built up between the air-supply fan unit 200 and the second flow passageway 420 of the pre-heat exchanger 400, and thus the outdoor air is flown into the case 100 and supplied to the inside of the room via the pre-heat exchanger 400 and the air-supply fan unit 200. The in-flowing path of the outdoor air is the same as previously explained and thus will not be repeated here.

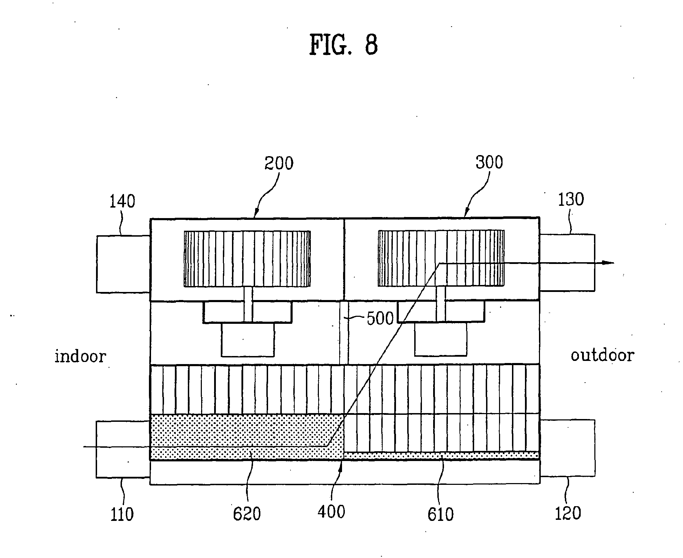

FIG. 8 is a diagram showing the airflow when the ventilating system of the invention is operated in an air-exhaust mode. In the air-exhaust mode, the contaminated indoor air is exhausted to the outside of the room, and the outdoor air is not supplied to the inside of the room. In this air-exhaust mode, the air-exhaust fan unit 300 is operated, but the air-supply fan unit 200 is not operated. Then, a low pressure is developed between the air-exhaust fan unit 300 and the first flow passageway 410 of the pre-heat exchanger 400 and thus the indoor air is in-flown to the case 100 and exhausted to the outside of the room via the pre-heat exchanger 400 and the air-exhaust fan unit 300. The out-flowing path of the indoor air is the same as previously describe and thus will not be repeated here.

In the air-exhaust mode, since the indoor air is filtered through the first filter 610, foreign matters rarely stick to the first flow passageway 410 of the pre-heat exchanger 400. Therefore, even in case where the ventilating system is operated for a long period of time, degradation in the heat-exchanging efficiency can be minimized. This air-exhaust mode can be utilized for exhausting the indoor air faster than usual, for example, when the indoor air is extremely contaminated.

The ventilating system according to the invention has a variety of advantages.

In the ventilating system, an air-supply fan unit and an air-exhaust fan unit are disposed side by side on the same side face inside the case, and the pre-heat exchanger is disposed opposed to the air-supply fan unit and the air-exhaust fan unit. Thus, the size of the case can be significantly reduced, as compared with the case where the air-supply fan unit and the air-exhaust fan unit are installed both sides of the pre-heat exchanger respectively. In addition, in case where a conventional size of case is adopted, the size of the pre-heat exchanger can be enlarged, thereby improving the energy efficiency thereof.

In the ventilating system according to the invention, the air-supply fan unit and the air-exhaust fan unit are disposed respectively on the discharging side of the pre-heat exchanger. Furthermore, the air-supply fan unit and the air-exhaust fan are spaced apart from the discharging side of the pre-heat exchanger. Accordingly, between the air-supply fan unit and the discharging side of the pre-heat exchanger, and between the air-exhaust fan unit and the discharging side of the pre-heat exchanger is built up an adequate low pressure, by which air flowability is improved.

Furthermore, in the suction side of the pre-heat exchanger are provided filters for the indoor air and the outdoor air entering the pre-heat exchanger. The filters prevent foreign materials from sticking to the flow passageways of the pre-heat exchanger, thus effectively avoiding degradation in the heat exchanging efficiency of the pre-heat exchanger.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A ventilating system comprising:
a case (100) fluid-communicated with the inside of a room and the outside of the room;
an air-supply fan unit (200) secured to the case (100) and introducing the outside air into the inside of the room;
an air-exhaust fan unit (300) secured to the case (100) and exhausting the indoor air to the outside of the room; and
a pre-heat exchanger (400) carrying out a heat exchange between the indoor air and the outdoor air, the pre-heat exchanger (400) being provided inside the case (100),
wherein the air-supply fan unit (200) and the air-exhaust fan unit (300) are disposed inside the case (100) so as to be adjacent to each other, wherein an inlet of the air-supply fan unit (200) and an inlet of the air-exhaust fan unit (300), respectively, face a discharge side of the pre-heat exchanger (400), so that air passes through the pre-heat exchanger (400) and is sucked to the air-supply fan unit (200) and the air-exhaust fan unit (300);
**characterized in that**
a partition plate (500) is provided between the pre-heat exchanger (400), the air-supply fan unit (200), and the air-exhaust fan unit (300), so as to prevent the indoor air and the outdoor air passed through the pre-heat exchanger (400) from being mixed with each other; and
wherein the partition plate (500) includes a central plate (510) disposed between the air-supply fan unit (200) and the air-exhaust fan unit (300); an upper plate (520) guiding air passed through the pre-heat exchanger (400) into either one of the air-supply fan unit (200) and the air-exhaust fan unit (300), the upper plate (520) being extended from the upper part of the central plate (510) to the inner surface of the case (100) and the pre-heat exchanger (400); and, a lower plate (530) guiding air passed through the pre-heat exchanger (400) into the other one of the air-supply fan unit (200) and the air-exhaust fan unit (300), the lower plate (530) being extended from the lower part of the central plate (510) to the inner surface of the case (100) and the pre-heat exchanger (400).

2. The system according to claim 1, wherein the air-supply fan unit (200) and the air-exhaust fan unit (300) are constructed so as to suction air in the axial direction and exhaust air in the radial direction respectively.

3. The system according to claim 1, wherein the pre-heat exchanger (400) includes flow passageways (410, 420), which are perpendicular to the entering direction of the indoor air and the outdoor air into the case (100).

4. The system according to claim 1, wherein the pre-heat exchanger (400) includes at least one edge or face, which is closely contacted with the inner face of the case so as to prevent the indoor air and the outdoor air entered into the case (100) from being mixed with each other.

5. The system according to claim 1, wherein the case includes:
a first inlet (110) provided in one face of the case and introducing the indoor air into the case; and
a second inlet (130) provided in the opposing face to the first inlet (110) of the case and introducing the outdoor air into the case (100).

6. The system according to claim 5, wherein the pre-heat exchanger (400) includes at least one edge or face, which is closely contacted with the inner face of the case (100) so as to isolate the first and second inlets (110, 130) from each other.

7. The system according to claim 1, wherein the pre-heat exchanger (400) includes a plurality of first flow passageways (410) disposed spaced apart from one another and a plurality of second flow passageways (420) disposed between the first flow passageways, the indoor air flowing the first flow passageways (410) and the outdoor air flowing the second flow passageways (420).

8. The system according to claim 1, wherein the air-supply fan unit (200) and the air-exhaust fan unit (300) each includes a scroll casing (210) mounted on the case (100), and a fan (220) provided inside the scroll casing (210) and suctioning the air passed through the pre-heat exchanger (400) in the axial direction and guiding in the radial direction thereof.

9. The system according to claim 8, wherein the air-supply fan unit (200) and the air-exhaust fan unit (300) each includes a motor (240) disposed between the fan (220) and the pre-heat exchanger (400), and a motor mount (230) secured to the scroll casing (210) and supporting the motor (240) so as to be spaced apart from the fan (220) by a certain distance such that the air passed through the pre-heat exchanger (400) can be in-flown to the fan (220).

10. The system according to claim 1, further comprising a filter (620) for filtering the outdoor air, the filter being provided inside the case (100) and disposed between the pre-heat exchanger (400) and the outside of the room.

11. The system according to claim 1, further comprising a filter (610) for filtering the indoor air, the filter (610) being provided inside the case (100) and disposed between the pre-heat exchanger (400) and the inside of the room.

## Patentansprüche

1. Belüftungssystem, das umfasst:
ein Gehäuse (100), das mit dem Inneren eines Raums und mit der äußeren Umgebung des Raums fluidtechnisch kommuniziert;
eine Luftzufuhr-Gebläseeinheit (200), die am Gehäuse (100) befestigt ist und die Außenluft in das Innere des Raums einleitet;
eine Luftabfuhr-Gebläseeinheit (300), die am Gehäuse (100) befestigt ist und die Innenluft in die äußere Umgebung des Raums abführt; und
einen Vorwärmetauscher (400), der einen Wärmeaustausch zwischen der Innenluft und der Außenluft vornimmt, wobei der Vorwärmetauscher (400) in dem Gehäuse (100) vorgesehen ist,
wobei die Luftzufuhr-Gebläseeinheit (200) und die Luftabfuhr-Gebläseeinheit (300) im Gehäuse (100) so angeordnet sind, dass sie zueinander benachbart sind, wobei ein Einlass der Luftzufuhr-Gebläseeinheit (200) und ein Einlass der Luftabfuhr-Gebläseeinheit (300) jeweils einer Auslassseite des Vorwärmetauschers (400) zugewandt sind, so dass sich Luft durch den Vorwärmetauscher (400) bewegt und zu der Luftzufuhr-Gebläseeinheit (200) und zu der Luftabfuhr-Gebläseeinheit (300) angesaugt wird;
**dadurch gekennzeichnet, dass**
eine Trennplatte (500) zwischen dem Vorwärmetauscher (400), der Luftzufuhr-Gebläseeinheit (200) und der Luftabfuhr-Gebläseeinheit (300) vorgesehen ist, um zu verhindern, dass sich die Innenluft und die Außenluft, die durch den Vorwärmetauscher (400) geschickt werden, miteinander mischen; und
wobei die Trennplatte (500) eine Mittelplatte (510), die zwischen der Luftzufuhr-Gebläseeinheit (200) und der Luftabfuhr-Gebläseeinheit (300) angeordnet ist; eine obere Platte (520), die Luft, die durch den Vorwärmetauscher (400) geschickt wird, entweder in die Luftzufuhr-Gebläseeinheit (200) oder in die Luftabfuhr-Gebläseeinheit (300) leitet, wobei sich die obere Platte (520) von dem oberen Teil der Mittelplatte (510) zu der inneren Oberfläche des Gehäuses (100) und des Vorwärmetauschers (400) erstreckt; und eine untere Platte (530), die Luft, die durch den Vorwärmetauscher (400) geschickt wird, in die jeweils Andere der Luftzufuhr-Gebläseeinheit (200) und die Luftabfuhr-Gebläseeinheit (300) leitet, wobei sich die untere Platte (530) von dem unteren Teil der Mittelplatte (510) zu der inneren Oberfläche des Gehäuses (100) und des Vorwärmetauschers (400) erstreckt, umfasst.

2. System nach Anspruch 1, wobei die Luftzufuhr-Gebläseeinheit (200) und die Luftabfuhr-Gebläseeinheit (300) so konstruiert sind, dass sie Luft in der axialen Richtung ansaugen bzw. Luft in der radialen Richtung abführen.

3. System nach Anspruch 1, wobei der Vorwärmetauscher (400) Strömungsdurchlässe (410, 420) enthält, die zu der Eintrittsrichtung der Innenluft und der Außenluft in das Gehäuse (100) senkrecht sind.

4. System nach Anspruch 1, wobei der Vorwärmetauscher (400) wenigstens eine Kante oder Fläche aufweist, die mit der Innenfläche des Gehäuses in engem Kontakt ist, um zu verhindern, dass die Innenluft und die Außenluft, die in das Gehäuse (100) eintreten, miteinander gemischt werden.

5. System nach Anspruch 1, wobei das Gehäuse umfasst:
einen ersten Einlass (110), der in einer Fläche des Gehäuses vorgesehen ist und die Innenluft in das Gehäuse einleitet; und
einen zweiten Einlass (130), der in der gegenüberliegenden Fläche bezüglich des ersten Einlasses (110) des Gehäuses vorgesehen ist und die Außenluft in das Gehäuse (100) einleitet.

6. System nach Anspruch 5, wobei der Vorwärmetauscher (400) wenigstens eine Kante oder Fläche aufweist, die mit der Innenfläche des Gehäuses (100) in engem Kontakt ist, um den ersten und den zweiten Einlass (110, 130) voneinander zu isolieren.

7. System nach Anspruch 1, wobei der Vorwärmetauscher (400) mehrere erste Strömungsdurchlässe (410), die voneinander beabstandet angeordnet sind, und mehrere zweite Strömungsdurchlässe (420), die zwischen den ersten Strömungsdurchlässen angeordnet sind, umfasst, wobei die Innenluft durch die ersten Strömungsdurchlässe (410) strömt und die Außenluft durch die zweiten Strömungsdurchlässe (420) strömt.

8. System nach Anspruch 1, wobei die Luftzufuhr-Gebläseeinheit (200) und die Luftabfuhr-Gebläseeinheit (300) jeweils ein Spiralgehäuse (210), das am Gehäuse (100) montiert ist, und ein Gebläse (220), das in dem Spiralgehäuse (210) vorgesehen ist und die durch den Vorwärmetauscher (400) geschickte Luft dessen axialer Richtung ansaugt und in dessen radialen Richtung lenkt, umfassen.

9. System nach Anspruch 8, wobei die Luftzufuhr-Gebläseeinheit (200) und die Luftabfuhr-Gebläseeinheit (300) jeweils einen Motor (240) enthalten, der zwischen dem Gebläse (220) und dem Vorwärmetauscher (400) angeordnet ist, und eine Motorhalterung (230) aufweist, die am Spiralgehäuse (210) befestigt ist und den Motor (240) unterstützt, damit er von dem Gebläse (220) um eine bestimmte Strecke beabstandet ist, so dass die Luft, die durch den Vorwärmetauscher (400) geschickt wird, in das Gebläse (220) einströmen kann.

10. System nach Anspruch 1, das ferner einen Filter (620) umfasst, um die Außenluft zu filtern, wobei der Filter im Gehäuse (100) vorgesehen ist und zwischen dem Vorwärmetauscher (400) und der äußeren Umgebung des Raums angeordnet ist.

11. System nach Anspruch 1, das ferner einen Filter (610) umfasst, um die Innenluft zu filtern, wobei der Filter (610) im Gehäuse (100) vorgesehen ist und zwischen dem Vorwärmetauscher (400) und dem Inneren des Raums angeordnet ist.

## Revendications

1. Système de ventilation comprenant :
un boîtier (100) en communication fluide avec l'intérieur d'une pièce et l'extérieur de la pièce ;
une unité de ventilateur d'alimentation en air (200) fixée au boîtier (100) et introduisant l'air extérieur à l'intérieur de la pièce ;
une unité de ventilateur d'extraction d'air (300) fixée au boîtier (100) et expulsant l'air intérieur à l'extérieur de la pièce ; et
un prééchangeur de chaleur (400) effectuant un échange de chaleur entre l'air intérieur et l'air extérieur, le prééchangeur de chaleur (400) étant placé à l'intérieur du boîtier (100),
dans lequel l'unité de ventilateur d'alimentation en air (200) et l'unité de ventilateur d'extraction d'air (300) sont disposées à l'intérieur du boîtier (100) en position adjacente l'une à l'autre, dans lequel une entrée de l'unité de ventilateur d'alimentation en air (200) et une entrée de l'unité de ventilateur d'extraction d'air (300), respectivement, font face à un côté refoulement du prééchangeur de chaleur (400), de sorte que de l'air passe dans le prééchangeur de chaleur (400) et est aspiré jusqu'à l'unité de ventilateur d'alimentation en air (200) et l'unité de ventilateur d'extraction d'air (300) ;
**caractérisé en ce que** :
une plaque de séparation (500) est placée entre le prééchangeur de chaleur (400), l'unité de ventilateur d'alimentation en air (200) et l'unité de ventilateur d'extraction d'air (300) afin d'empêcher l'air intérieur et l'air extérieur qui passent dans le prééchangeur de chaleur (400) de se mélanger ; et
dans lequel la plaque de séparation (500) comprend une plaque centrale (510) placée entre l'unité de ventilateur d'alimentation en air (200) et l'unité de ventilateur d'extraction d'air (300), une plaque supérieure (520) guidant l'air qui passe dans le prééchangeur de chaleur (400) pour le faire entrer soit dans l'unité de ventilateur d'alimentation en air (200) soit dans l'unité de ventilateur d'extraction d'air (300), la plaque supérieure (520) s'étendant de la partie supérieure de la plaque centrale (510) à la surface interne du boîtier (100) et du prééchangeur de chaleur (400), et une plaque inférieure (530) guidant l'air qui passe dans le prééchangeur de chaleur (400) pour le faire entrer dans l'autre unité parmi l'unité de ventilateur d'alimentation en air (200) et l'unité de ventilateur d'extraction d'air (300), la plaque inférieure (530) s'étendant de la partie inférieure de la plaque centrale (510) à la surface interne du boîtier (100) et du prééchangeur de chaleur (400).

2. Système selon la revendication 1, dans lequel l'unité de ventilateur d'alimentation en air (200) et l'unité de ventilateur d'extraction d'air (300) sont conçues respectivement pour aspirer l'air dans la direction axiale et expulser l'air dans la direction radiale.

3. Système selon la revendication 1, dans lequel le prééchangeur de chaleur (400) comprend des passages d'écoulement (410, 420), qui sont perpendiculaires à la direction d'entrée de l'air intérieur et de l'air extérieur dans le boîtier (100).

4. Système selon la revendication 1, dans lequel le prééchangeur de chaleur (400) comprend au moins un bord ou face, qui est mis(e) en contact étroit avec la face interne du boîtier afin d'empêcher l'air intérieur et l'air extérieur entrés dans le boîtier (100) de se mélanger.

5. Système selon la revendication 1, dans lequel le boîtier comprend :
une première entrée (110) prévue dans une face du boîtier et introduisant l'air intérieur dans le boîtier ; et
une deuxième entrée (130) prévue dans la face opposée à la première entrée (110) du boîtier et introduisant l'air extérieur dans le boîtier (100).

6. Système selon la revendication 5, dans lequel le prééchangeur de chaleur (400) comprend au moins un bord ou face, qui est mis(e) en contact étroit avec la face interne du boîtier (100) afin d'isoler les première et deuxième entrées (110, 130) l'une de l'autre.

7. Système selon la revendication 1, dans lequel le prééchangeur de chaleur (400) comprend une pluralité de premiers passages d'écoulement (410) espacés les uns des autres et une pluralité de deuxièmes passages d'écoulement (420) placés entre les premiers passages d'écoulement, l'air intérieur circulant dans les premiers passages d'écoulement (410) et l'air extérieur circulant dans les deuxièmes passages d'écoulement (420).

8. Système selon la revendication 1, dans lequel l'unité de ventilateur d'alimentation en air (200) et l'unité de ventilateur d'extraction d'air (300) comprennent chacune un carter à volute (210) monté sur le boîtier (100), et un ventilateur (220) placé à l'intérieur du carter à volute (210) et aspirant l'air qui passe dans le prééchangeur de chaleur (400) dans la direction axiale et le guidant dans la direction radiale de celui-ci.

9. Système selon la revendication 8, dans lequel l'unité de ventilateur d'alimentation en air (200) et l'unité de ventilateur d'extraction d'air (300) comprennent chacune un moteur (240) placé entre le ventilateur (220) et le prééchangeur de chaleur (400), et un support de moteur (230) fixé au carter à volute (210) et supportant le moteur (240) de façon à ce qu'il soit espacé du ventilateur (220) d'une certaine distance de telle manière que l'air qui passe dans le prééchangeur de chaleur (400) peut être envoyé sur le ventilateur (220).

10. Système selon la revendication 1, comprenant en outre un filtre (620) pour filtrer l'air extérieur, le filtre étant placé à l'intérieur du boîtier (100) et disposé entre le prééchangeur de chaleur (400) et l'extérieur de la pièce.

11. Système selon la revendication 1, comprenant en outre un filtre (610) pour filtrer l'air intérieur, le filtre (610) étant placé à l'intérieur du boîtier (100) et disposé entre le prééchangeur de chaleur (400) et l'intérieur de la pièce.
